# EUROPÄISCHE PATENTSCHRIFT

(11) **EP 1 231 697 B1**
(45) Veröffentlichungstag und Bekanntmachung des Hinweises auf die Patenterteilung: **24.08.2005**
(21) Anmeldenummer: 02002494.9
(22) Anmeldetag: 02.02.2002
(51) Int. Cl.: H02J 9/00

(54) **Eingangsschaltung für die Zuführung einer Versorgungsspannung an eine Elektronikbaugruppe mit einem Autarkiekondensator**
Input circuit for supplying voltage to electronic components with an autarky capacitor
Circuit d'entrée pour amener une tension d'alimentation à des ensembles électroniques avec un condensateur d'autarcie

(30) Priorität: 13.02.2001 DE 10106520
(43) Veröffentlichungstag der Anmeldung: 14.08.2002
(73) Patentinhaber: Conti Temic microelectronic GmbH, 90411 Nürnberg (DE)
(72) Erfinder: Fendt, Günter, 86529 Schrobenhausen (DE)

(56) Entgegenhaltungen:
- WO-A-00/13942
- DE-C- 19 702 899
- DE-C- 19 751 910
- US-A- 6 097 109

## Beschreibung

Die Erfindung betrifft eine Eingangsschaltung für die Zuführung einer Versorgungsspannung aus einem Versorgungsnetz an eine Elektronikbaugruppe mit einem Autarkiekondensator gemäß dem Oberbegriff des Anspruchs 1.

Eine derartige Eingangsschaltung ist beispielsweise aus der WO 90/02440 oder DE 197 51 910 C1 oder US 6 097 109 A bekannt.

Insbesondere bei Elektronikbaugruppen mit Autarkiekondensatoren entsteht bei entladenem Autarkiekondensator eine erhebliche Belastung des Versorgungsnetzes durch die Spitzenwerte des Stroms bei Zuschaltung der Versorgungsspannung. Auf dem Versorgungsspannungsnetz kommt es häufig zu Störungen mit gegenüber der Versorgungsspannung erhöhten Spannungsspitzen, sei es durch Kurzschlüsse, induktive Einkopplungen oder das Schalten induktiver Lasten. Dies kann insbesondere auch in Bordnetzen von Kraftfahrzeugen zu erheblichen Störungen der zu versorgenden Elektronikbaugruppe führen.

Aufgabe der Erfindung ist es daher, eine Eingangsschaltung vorzustellen, die einerseits die Belastungen des Bordnetzes reduziert, andererseits die Elektronikbaugruppe schützt. Diese Aufgaben sind durch die Ansprüche 1 und 2 gelöst.

Grundgedanke ist dabei eine Begrenzung der Stromentnahme aus dem Versorgungsnetz in Abhängigkeit vom Ladezustand des Autarkiekondensators. So wird gerade im kritischen Bereich des entladenen Autarkiekondensators die Stromentnahme aktiv begrenzt, indem zwischen Versorgungsnetz und Autarkiekondensator eine Strombegrenzungsvorrichtung, vorzugsweise ein MOSFET durch Vorgabe einer entsprechenden Gatespannung aktiv wird.

Die Gatespannung wird in Abhängigkeit vom Ladezustand des Autarkiekondensators gesteuert, indem zwischen Autarkiekondensator und MOSFET eine Z-Diode mit einer Durchbruchsspannung angeordnet wird, die damit die Gate-Source-Spannung des MOSFETs und damit die maximale Stromentnahme steuert.

Erhöht sich die Spannung am Autarkiekondensator, kann damit auch die Gatespannung weiter steigen. Somit bleibt die Differenz aus Gate-Spannung zu Source-Spannung und damit die Stromentnahme annähernd konstant.

Alternativ kann zwischen Versorgungsnetz und Autarkiekondensator ein Eingangswiderstand angeordnet sein, der seinerseits bereits die Stromentnahme geringfügig begrenzt. Die Spannungsdifferenz über diesem Eingangswiderstand ist abhängig von der Spannung am Autarkiekondensator und damit vom Ladezustand des Autarkiekondensators. Zudem ist ein Schaltmittel vorgesehen, vorzugsweise wieder ein MOSFET, der ab einem Maximalwert des Stromes durch den Eingangswiderstand bzw. der Spannung über dem Eingangswiderstand den Strom wieder begrenzt, beispielsweise durch eine entsprechende Ansteuerung der Gatespannung.

Die Eingangsschaltung gewährleistet sowohl ein Schutz gegen äußere Störungen durch Überspannungen auf dem Versorgungsnetz als auch gegen zu hohe Stromentnahme bei der Aufladung des Autarkiekondensators.

Die für die Gateansteuerung erforderliche Spannung am Gate wird dabei vorzugsweise aus der Versorgungsspannung erzeugt und als Referenzspannung hochohmig zugeführt. Die hochohmige Referenzspannungsquelle kann als Aufwärtswandler mit geringer Ausgangsleistung und hohem Ausgangswiderstand ausgebildet sein. Alternativ ist ein hochohmiger Widerstand mit einer Diode denkbar, wobei die Diode in Durchlassrichtung für eine gegenüber der Gatespannung höhere Versorgungsspannung geschaltet ist.

Über die demgegenüber jeweils deutlich niederohmige Ableitung kann im Bedarfsfalle, insbesondere zur Strombegrenzung, die Gatespannung jedoch herabgesetzt werden. So begrenzt eine gegen Masse geschaltete Z-Diode zusätzlich die Gate-Spannung um damit die Belastung der Elektronikbaugruppe bei Überspannungen auf dem Versorgungsspannungsnetz. Alternativ kann dies durch einen Komparator mit Open-Collector-Ausgang erreicht werden.

Die Gate-Spannung wird zudem in Abhängigkeit von der Spannung und damit dem Ladezustand des Autarkiekondensators begrenzt. Dafür ist entweder eine Z-Diode zwischen Gate und Autarkiekondensator oder aber eine Steuerung in Abhängigkeit vom Stromfluß durch den Eingangswiderstand vorgesehen.

Vorzugsweise wird der Autarkiekondensator mittels eines Aufwärtswandlers auf ein gegenüber der Vorsorgungsspannung erhöhtes Spannungsniveau geladen.

Dieser Aufwärtswandler in Serie zwischen Versorgungsnetz und Autarkiekondensator wird vorzugsweise durch eine Diode überbrückt, die für Versorgungsspannungen (um den Wert der Diodenspannung) oberhalb der Kondensatorspannung leitend ist, so dass bei entladenem Autarkiekondensator die Aufladung direkt aus dem Versorgungsnetz erfolgt. Zudem wird der Wirkungsgrad erhöht, denn die Verluste im Aufwärtswandler werden vermieden, indem bei entladenem Autarkiekondensator der Aufwärtswandler zunächst inaktiv ist. Ist der Autarkiekondensator weitgehend aufgeladen, kann dieser über eine zwischen Gate und Autarkiekondensator angeordnete Diode und einen hochohmigen Widerstand auch auf diesem Spannungsniveau gehalten werden.

Eine solche Eingangsschaltung erweist sich als besonders vorteilhaft für Elektronikbaugruppen in Bussystemen von Insassenschutzeinrichtungen in Kraftfahrzeugen mit auf der Versorgungsspannung aufmodulierter Datenübertragung.

Die Erfindung soll nachfolgend anhand von Ausführungsbeispielen und den Figuren näher erläutert werden. Kurze Beschreibung der Figuren:
- Figur 1: erstes Ausführungsbeispiel einer Eingangsschaltung für die Zuführung einer Versorgungsspannung an eine Elektronikbaugruppe mit einem Autarkiekondensator
- Figur 2: abgewandeltes Ausführungsbeispiel mit alternativer Erzeugung der Referenzspannung am Gate des MOSFET
- Figur 3: weiteres Ausführungsbeispiel mit einem Eingangswiderstand und einem Schaltmittel zur Steuerung der Stromentnahme
- Figur 4: Strom- und Spannungsverhältnisse beim Einschalten der Versorgungsspannung und entladenem Autarkiekondensator ohne Strombegrenzung
- Figur 5: Strom- und Spannungsverhältnisse beim Einschalten der Versorgungsspannung und entladenem Autarkiekondensator mit Strombegrenzung
- Figur 6: Strom- und Spannungsverhältnisse bei einer Überspannung auf dem Versorgungsspannungsnetz

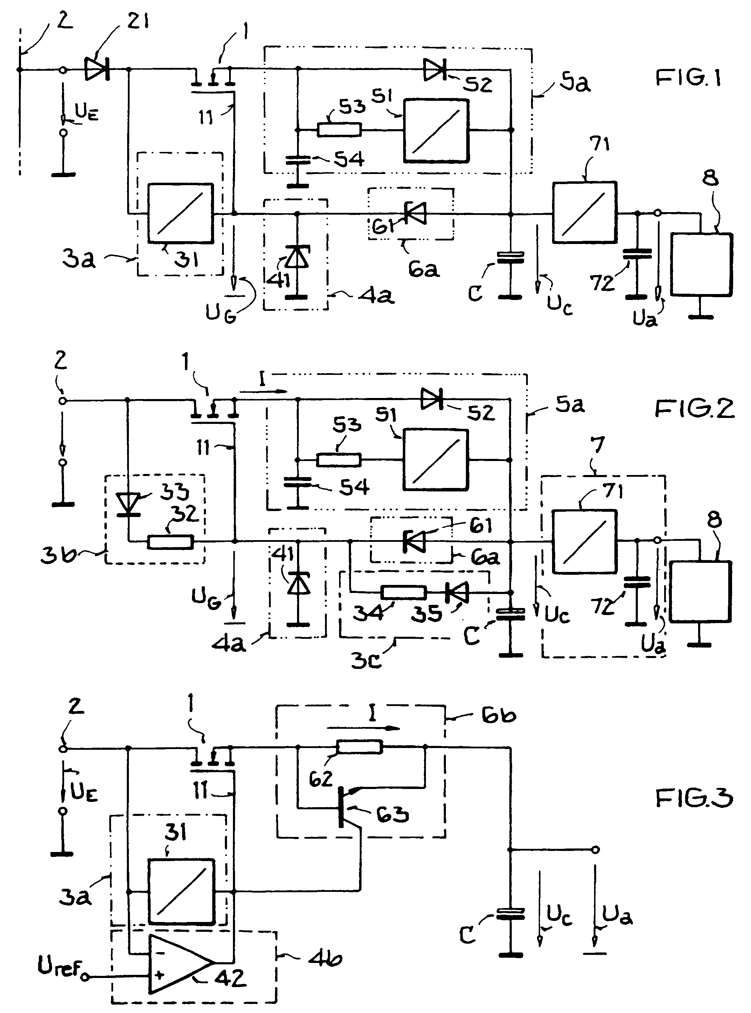

Die Figuren 1 bis 3 zeigen jeweils Ausgestaltungen einer Eingangsschaltung für die Zuführung einer Versorgungsspannung Ue aus einem Versorgungsnetz 2 an eine Elektronikbaugruppe 1, wobei diese Elektronikbaugruppe 8 zur Aufrechterhaltung der Betriebsbereitschaft bei Ausfall der Versorgungsspannung Ue für eine vorgegebene Autarkiezeit einen Autarkiekondensator C aufweist. Eine Diode 21 verhindert jeweils einen Rückfluß der Ladung aus dem Autarkiekondensator C im Autarkiefall bei Wegfall der Versorgungsspannung. Am Versorgungsnetz 2 sind weitere Elektronikbaugruppen anschließbar, insbesondere kann das Versorgungsnetz ein Bussystem von Insassenschutzeinrichtungen in einem Kraftfahrzeug sein, bei dem auf der Versorgungsspannung Datensignale aufmoduliert sind, beispielsweise durch Strom- oder Spannungssignale. Jede der Figuren 1 bis 3 weist Mittel (6a, 6b) zum Erfassen des Ladezustands des Autarkiekondensators C und eine Strombegrenzungsvorrichtung 1 auf, welche die Stromentnahme I(t) aus dem Versorgungsnetz 2 in Abhängigkeit des Ladezustands des Autarkiekondensators C begrenzt. Zusätzlich sind Mittel zur Überspannungsabsicherung 4a, 4b vorgesehen, die ergänzend auf die Strombegrenzungsvorrichtung 1 einwirken.

Die Strombegrenzungsvorrichtung 1 ist vorzugsweise jeweils als MOSFET 1 ausgestaltet, insbesondere als Anreicherungstyp. Am Gate 11 wird mit einer hochohmigen Referenzspannungsquelle (3a, 3b) eine entsprechende Referenzspannung zugeführt, wobei die Referenzspannung vorzugsweise aus der Versorgungsspannung erzeugt wird.

In Figur 1 ist ein Aufwärtswandler 31 zur Erzeugung dieser Referenzspannung vorgesehen. Der Aufwärtswandler wirkt dabei hochohmig, erzeugt kaum Leistung und nur einen geringen Ausgangsstrom, so dass die Spannung Ug am Gate 11 durch eine entsprechend niederohmigere Ableitung jeweils dominant gesteuert werden kann. Zum einen wird die Gatespannung Ug in Abhängigkeit des Ladezustands des Autarkiekondensators C gesteuert, indem über eine Z-Diode 61 mit einer vorgegebenen Durchbruchsspannung die Spannung am Autarkiekondensator C auf das Gate 11 eines MOSFETs 1 zwischen Versorgungsnetz 2 und Autarkiekondensator C gesteuert wird. Die Gatespannung Ug am MOSFET 1 kann somit nur auf einem der Durchbruchsspannung der Z-Diode 61 plus der Spannung Uc am Autarkiekondensator C entsprechenden Wert ansteigen bzw. die Gate-Source-Spannung den Wert der Durchbruchsspannung plus dem Spannungsabfall über die Diode 52 annehmen, deren Wirkung später noch näher erläutert wird.

Gerade im kritischen Bereich des nahezu vollständig entladenen Autarkiekondensators C wird daher die Strombegrenzung aktiv, indem der MOSFET 1 aufgrund der entsprechend der Spannung am Autarkiekondensator C niedrigen Gatespannung Ug zunächst die Stromentnahme begrenzt, mit steigender Spannung Uc am Autarkiekondensator C jedoch erhöht wird und letztlich vorzugsweise den niederohmigen linearen Bereich der MOSFET-Kennlinie erreicht.

Zudem ist am Gate 11 des MOSFETs 1 eine Z-Diode 41 mit Masse verbunden, wobei diese Z-Diode 41 als Überspannungsschutz bei einer Gate-Spannung Ug oberhalb der Durchbruchsspannung der Z-Diode 41 aktiv wird.

Zwischen Strombegrenzungsschaltung 1 und Autarkiekondensator C ist zudem ein Aufwärtswandler 51 geschaltet. Dadurch wird die bei gleicher Kapazität des Autarkiekondensators C dort speicherbare Energie erhöht und damit die Autarkiezeit für die Elektronikbaugruppe 8 verlängert. Die Spannung am Autarkiekondensator C kann dann, wie in Fig. 1 gezeigt, mittels eines Abwärtswandlers 71 wieder auf den für die Elektronikbaugruppe 8 gewünschten Spannungswert herabgesetzt werden. Die Ausgangsspannung Ua wird dabei vorzugsweise nochmals in einem Kondensator 72 gepuffert, wobei die Kapazität dieses Kondensators 72 deutlich kleiner ausfallen kann.

Der Aufwärtswandler 51 wird vorzugsweise für Versorgungsspannungen Ue oberhalb der Kondensatorspannung Uc durch eine Diode 52 überbrückt, um die am Aufwärtswandler 51 unvermeidlich auftretenden Wirkungsgradverluste nur dann in Kauf zu nehmen, wenn tatsächlich eine Aufwärtswandlung erforderlich ist.

Figur 2 zeigt nun eine abgewandelte Ausführungsform der Eingangsschaltung, bei der die hochohmige Referenzspannungsquelle alternativ durch zwei Funktionsblöcke 3b und 3c anstelle des in Fig. 1 vorgesehenen Aufwärtswandlers 31 gebildet wird. So ist in Fig. 2 das Gate 11 des MOSFETs 1 mit dem Versorgungsnetz 2 über einen hochohmigen Widerstand 32 und eine Diode 33 verbunden ist, wobei die Diode 33 in Durchlassrichtung für eine gegenüber der Gatespannung Ug höhere Versorgungsspannung Ue geschaltet ist. In diesem Fall sollte jedoch unbedingt ein Überspannungsschutz 4a (oder 4b) vorgesehen sein, hier in Fig. 2 wieder ausgeführt als Z-Diode auf Masse mit einer die Überspannungsschwelle definierenden Durchbruchsspannung.

Zudem ist zwischen dem Gate 11 und dem Autarkiekondensator C eine weitere Diode 35 und ein weiterer hochohmiger Widerstand 34 angeordnet, wobei die Diode 35 ab einer Spannung Uc am Autarkiekondensator C oberhalb der Spannung Ug am Gate 11 leitend ist. Dieser Zweig 3c übernimmt also bei ausreichender Spannung Uc am Autarkiekondensator C die weitere Steuerung der Gatespannung Ug und steuert so den MOSFET 1 in den niederohmig leitenden Zustand. Dieser Zweig 3c ist somit parallel zur Z-Diode 61.

Der sonstige Aufbau von Fig. 2, insbesondere die funktional entscheidende Rückkopplung vom Autarkiekondensator C über die Z-Diode 61 zum Gate 11 des MOSFETs 1 ist unverändert.

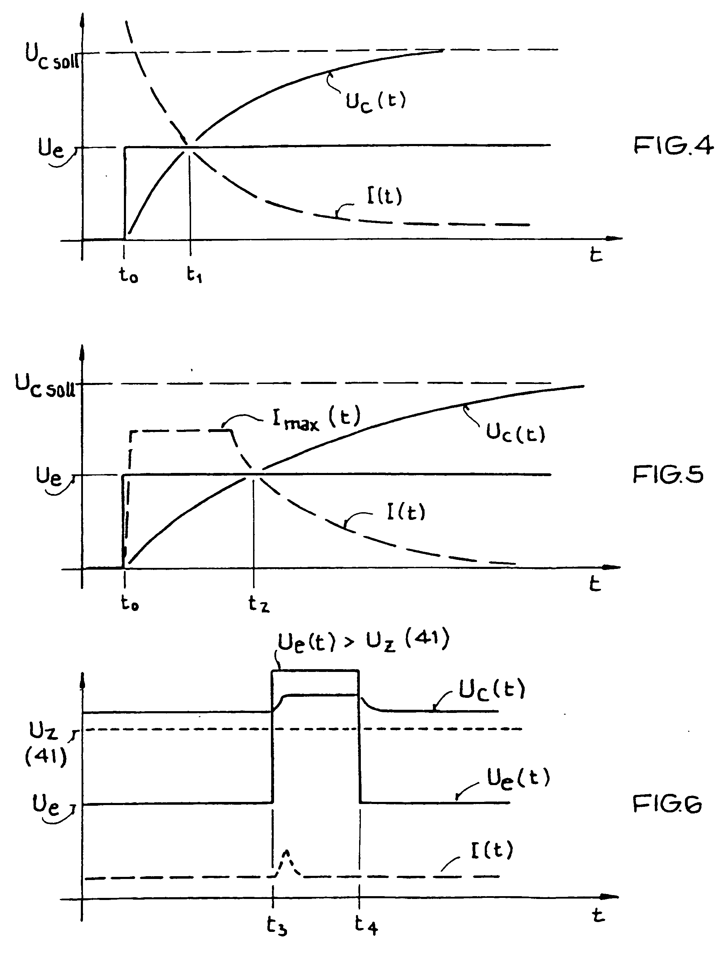

Figur 3 zeigt nun noch eine weitere Ausgestaltung der Eingangsschaltung, bei der jedoch in Serie zwischen Versorgungsnetz 2 und Autarkiekondensator C ein Schaltmittel, vorzugsweise wieder ein MOSFET 1 und ein Eingangswiderstand 62 angeordnet ist. Der Eingangswiderstand 62 weist einen Widerstandswert auf, bei dem bis zu einer vorgegebenen Maximalspannungsdifferenz zwischen der Versorgungsspannung Ue und der Spannung am Autarkiekondensator Uc die Stromentnahme aus dem Versorgungsnetz auf einen Maximalstromwert Imax begrenzt ist, also R62= Max(Ue-Uc)/Imax. Zudem ist eine Spannungs- bzw. Stromentnahmeüberwachungsschaltung (63) vorgesehen ist, welche die Spannung über dem Eingangswiderstand 62 erfasst und ein entsprechendes Steuersignal an das Schaltmittel 1 abgibt. Dabei entspricht der Spannungsabfall über dem Eingangswiderstand 62 der Stromentnahme. In diesem Ausführungsbeispiel ist die Überwachungsschaltung durch einen Bipolartransistor 63 realisiert, welcher zwischen Basis und Emitter die Spannung über dem Eingangswiderstand 62 erfasst und dessen Kollektor mit dem Gate 11 des MOSFETs 1 verbunden ist. Über den Transistor 63 ist nun die Stromentnahme in Abhängigkeit von der Spannung und damit dem Ladezustand des Autarkiekondensators C eingestellt. Steigt die Stromentnahme über den eingestellten Wert, so wird die Kollektor-Emitter-Strecke des Transistsors 63 leitend und senkt die Gate-Spannung Ug am Gate 11 des MOSFETs 1 unter den von der Referenzspannungsquelle 3a erzeugten Wert, hier ausgestaltet wieder als leistungsarmer Aufwärtswandler 31.

Des weiteren ist das Gate 11 gegen Überspannungen abgesichert, indem ein Komparator 42 mit einem Open-Collector-Ausgang am Gate 11 zugeschaltet ist, an dessen invertierendem Eingang die Versorgungsspannung Ue und an dessen nicht invertierenden Eingang die Referenzspannung Uref anliegt. Tritt eine Überspannung auf dem Versorgungsnetz 2 auf, so fällt der Ausgang des Komparators 42 niederohmig auf Low und senkt damit die Gate-Spannung Ug, der MOSFET 1 wird hochohmig und die Elektronikbaugruppe 8 wird von der Überspannung geschützt. Diese Sperrung des MOSFETs1 hat gegenüber der Variante 4a aus den Figuren 1 und 2 mit der Z-Diode 41 den Vorteil, daß bei andauernder Überspannung der MOSFET 1 durch die Verlustleistung nicht überlastet werden kann.

Fig. 4 zeigt die Strom- und Spannungsverhältnisse beim Einschalten der Versorgungsspannung Ue und entladenem Autarkiekondensator Uc(t0)=0 ohne Strombegrenzung. Die Stromentnahme I(t) steigt dabei zunächst stark an und kann so zu einer erheblichen Störung auf dem Versorgungsnetz 2 führen. Berücksichtigt man, dass Versorgungsnetze 2 in Kraftfahrzeugen häufig in Abhängigkeit von der Zündschlüsselposition geschaltet werden sollen und daher durch das Zündschloß geführt werden, ergeben sich erhebliche Strombelastungen gerade auch in diesem Bereich.

Figur 5 zeigt nun im Vergleich dazu die Strom- und Spannungsverhältnisse beim Einschalten der Versorgungsspannung Uc und entladenem Autarkiekondensator mit einer Eingangsschaltung gemäß Fig. 1. Deutlich erkennbar ist das Eingreifen der Strombegrenzung und der zumindest näherungsweise konstante Stromentnahmewert Imax(t) mit zunehmender Spannung Uc am Autarkiekondensator C und damit gleichermaßen zunehmender Spannung an Gate und Source, also annähernd konstanter Gate-Source-Spannung. Durch die Begrenzung der Stromentnahme steigt zwar die Spannung am Autarkiekondensator C langsamer an tl<t2, jedoch wird dabei das Versorgungsnetz 2 auch deutlich geringer belastet.

Figur 6 zeigt nun noch die Strom- und Spannungsverhältnisse bei einer Überspannung Ue(t)>Uz(41) auf dem Versorgungsspannungsnetz 2, welche die Durchbruchsspannung Uz der Z-Diod3e 41 übersteigt. Dann wird diese leitend, wodurch sich die Spannung Uc(t) am Autarkiekondensator C nur in äußerst geringem Maße verändert - die Elektronikbaugruppe 8 also vor dieser Überspannung geschützt wird.

## Patentansprüche

1. Eingangsschaltung für die Zuführung einer Versorgungsspannung (Ue) aus einem Versorgungsnetz (2) für eine Elektronikbaugruppe (8) mit einem Autarkiekondensator (C), **dadurch gekennzeichnet, dass**
a) Mittel (6a, 6b) zum Erfassen des Ladezustands des Autarkiekondensators (C) und
b) eine Strombegrenzungsvorrichtung (1) vorgesehen sind, welche die Stromentnahme (I) aus dem Versorgungsnetz (2) in Abhängigkeit des erfassten Ladezustands (Uc(t)) des Autarkiekondensators (C) begrenzt.

2. Eingangsschaltung nach Anspruch 1, **dadurch gekennzeichnet, dass** zwischen Versorgungsnetz (2) und Autarkiekondensator (C) ein MOSFET (1) angeordnet ist, dessen Gate (11) über eine Z-Diode (61) mit einer vorgegebenen Durchbruchsspannung mit dem Autarkiekondensator (C) verbunden ist.

3. Eingangsschaltung nach Anspruch 1, **dadurch gekennzeichnet, dass**
a) in Serie zwischen Versorgungsnetz (2) und Autarkiekondensator (C) ein Schaltmittel (1) und ein Eingangswiderstand (62) angeordnet sind,
b) der Eingangswiderstand (62) einen Widerstandswert aufweist, bei dem bis zu einer vorgegebenen Maximalspannungsdifferenz zwischen der Versorgungsspannung (U) und der Spannung am Autarkiekondensator (Uc) die Stromentnahme aus dem Versorgungsnetz auf einen Maximalstromwert (Imax) begrenzt ist und
c) eine Spannungsüberwachungsschaltung (63) vorgesehen ist, welche die Spannung über dem Eingangswiderstand (R) erfasst und daraus ein Steuersignal für das Schaltmittel (1) ableitet.

4. Eingangsschaltung nach einem der Ansprüche 3, **dadurch gekennzeichnet, daß** das Schaltmittel ein MOSFET (1) ist, dessen Gatespannung (Ug) in Abhängigkeit des erfassten Ladezustands (Uc(t)) des Autarkiekondensators (C) gesteuert wird.

5. Eingangsschaltung nach Anspruch 2 oder 4, **dadurch gekennzeichnet, daß** das Gate (11) des MOSFET (1) mit einer hochohmigen Referenzspannungsquelle (3a, 3b) verbunden ist, die aus der Versorgungsspannung (Ue) gespeist wird.

6. Eingangsschaltung nach Anspruch 5, **dadurch gekennzeichnet, dass** das Gate mit dem Versorgungsnetz (2) über einen hochohmigen Widerstand (32) und eine Diode (33) verbunden ist, wobei die Diode (33) in Durchlassrichtung für eine gegenüber der Gatespannung (Ug) höhere Versorgungsspannung (Ue) geschaltet ist.

7. Eingangsschaltung nach Anspruch 5, **dadurch gekennzeichnet, daß** ein Aufwärtswandler (31) zur Erzeugung der Referenzspannung vorgesehen ist.

8. Eingangsschaltung nach Anspruch 2 bis 7, **dadurch gekennzeichnet, daß** das Gate (11) des MOSFETs (1) über eine Z-Diode (41) mit Masse verbunden ist.

9. Eingangsschaltung nach einem der vorangehenden Ansprüche, **dadurch gekennzeichnet, dass** zwischen Strombegrenzungsschaltung (1) und Autarkiekondensator (C) ein Aufwärtswandler (51) geschaltet ist.

10. Eingangsschaltung nach Anspruch 9, **dadurch gekennzeichnet, daß** der Aufwärtswandler (51) durch eine Diode (52) überbrückt ist, die für Versorgungsspannungen (Ue) oberhalb der Kondensatorspannung (Uc) leitend ist.

11. Eingangsschaltung nach einem der Ansprüche 2 bis 8, **dadurch gekennzeichnet, daß** zwischen Gate (11) und Autarkiekondensator (C) eine Diode (35) und ein hochohmiger Widerstand (34) angeordnet sind, wobei die Diode (35) ab einer Spannung (Uc) am Autarkiekondensator (C) oberhalb der Spannung (Ug) am Gate (11) leitend ist.

12. Verwendung der Eingangsschaltung nach einem der vorangehenden Ansprüche für Bussysteme von Insassenschutzeinrichtungen in Kraftfahrzeugen mit auf der Versorgungsspannung aufmodulierter Datenübertragung.

## Claims

1. Input circuit for supplying a supply voltage (Ue) from an electric power grid (2) for electronic components (8) with an autarky capacitor (C), **characterized in that**
a) there are provided means (6a, 6b) for detecting the charging condition of the autarky capacitor (C); and
b) a current limiter (1) that limits the current drain (I) from the electric power grid (2) depending on the detected charging condition (Uc(t)) of the autarky capacitor (C).

2. Input circuit according to claim 1, **characterized in that** a MOSFET (1) is arranged between the electric power grid (2) and the autarky capacitor (C), wherein the gate (11) of said MOSFET (1) is connected to the autarky capacitor (C) via a Zener diode (61) with a predetermined breakdown voltage.

3. Input circuit according to claim 1, **characterized in that**
a) a switching means (1) and an input resistance (62) are arranged in series between the electric power grid (2) and the autarky capacitor (C);
b) the input resistance (62) comprises a value of resistance for which, up to a predetermined maximum voltage difference between the supply voltage (Ue) and the voltage at the autarky capacitor (Uc), the current drain from the electric power grid is limited to a maximum current value (Imax); and
c) there is provided a voltage monitoring circuit (63) that detects the voltage across the input resistance (R) and derives a control signal for the switching means (1) from that voltage.

4. Input circuit according to claim 3, **characterized in that** the switching means is a MOSFET (1) the gate voltage (Ug) of which is controlled depending on the detected charging condition (Uc(t)) of the autarky capacitor (C).

5. Input circuit according to claim 2 or 4, **characterized in that** the gate (11) of the MOSFET (1) is connected to a high ohmic reference voltage source (3a, 3b) that is powered by the supply voltage (Ue).

6. Input circuit according to claim 5, **characterized in that** the gate is connected to the electric power grid (2) via a high ohmic resistance (32) and a diode (33), wherein the diode (33), in forward direction, is connected for a supply voltage (Ue) that is higher than the gate voltage (Ug).

7. Input circuit according to claim 5, **characterized in that** there is provided an up converter (31) for generating the reference voltage.

8. Input circuit according to claims 2 to 7, **characterized in that** the gate (11) of the MOSFET (1) is connected to earth via a Zener diode (41).

9. Input circuit according to any one of the preceding claims, **characterized in that** an up converter (51) is connected between the current limiter (1) and the autarky capacitor (C).

10. Input circuit according to claim 9, **characterized in that** the up converter (51) is bypassed by a diode (52) that is conductive for supply voltages (Ue) higher than the capacitor voltage (Uc).

11. Input circuit according to any one of claims 2 to 8, **characterized in that** a diode (35) and a high ohmic resistance (34) are arranged between the gate (11) and the autarky capacitor (C), wherein the diode (35) is only conductive for a voltage (Uc) at the autarky capacitor (C) higher than the voltage (Ug) at the gate (11).

12. Use of the input circuit according to any one of the preceding claims for bus systems of motor vehicle passenger safeguards with data transmission modulated onto the supply voltage.

## Revendications

1. Circuit d'entrée pour l'amenée d'une tension d'alimentation (Ue) à partir d'un réseau d'alimentation (2) pour un sous-groupe électronique (8) avec un condensateur autarcique (C), **caractérisé en ce que**
a) il est prévu des moyens (6a, 6b) pour saisir l'état de charge du condensateur autarcique (C) et
b) il est prévu un dispositif de limitation de courant (1) qui limite le prélèvement de courant (I) à partir du réseau d'alimentation (2) en fonction de l'état de charge (Uc(t)) saisi du condensateur autarcique (C).

2. Circuit d'entrée selon la revendication 1, **caractérisé en ce que**, entre le réseau d'alimentation (2) et le condensateur autarcique (C), est disposé un MOSFET (1) dont la grille (11) est, via une diode Z (61), connectée au condensateur autarcique (C) avec une tension d'avalanche prédéfinie.

3. Circuit d'entrée selon la revendication 1, **caractérisé en ce que**
a) un moyen de commutation (1) et une résistance d'entrée (62) sont disposés en série entre le réseau d'alimentation (2) et le condensateur autarcique (C),
b) la résistance d'entrée (62) présente une valeur de résistance pour laquelle, jusqu'à une différence de tension maximale prédéfinie entre la tension d'alimentation (Ue) et la tension sur le condensateur autarcique (Uc), le prélèvement de courant à partir du réseau d'alimentation est limité à une valeur de courant maximale (Imax) et
c) un circuit de surveillance de tension (63) est prévu, qui saisit la tension sur la résistance d'entrée (R) et en dérive un signal de commande pour le moyen de commutation (1).

4. Procédé selon selon la revendication 3, **caractérisé en ce que** le moyen de commutation est un MOSFET (1), dont la tension de grille (Ug) est commandée en fonction de l'état de charge (Uc(t)) saisi du condensateur autarcique (C).

5. Circuit d'entrée selon la revendication 2 ou 4, **caractérisé en ce que** la grille (11) du MOSFET (1) est connectée à une source de tension de référence (3a, 3b) à valeur ohmique élevée qui est alimentée à partir de la tension d'alimentation (Ue).

6. Circuit d'entrée selon la revendication 5, **caractérisé en ce que** la grille est connectée au réseau d'alimentation (2) via une résistance à valeur ohmique élevée (32) et une diode (33), la diode (33) étant montée dans le sens de conduction pour une tension d'alimentation (Ue) plus élevée par rapport à la tension de grille (Ug).

7. Circuit d'entrée selon la revendication 5, **caractérisé en ce qu'**il est prévu un convertisseur élévateur (31) pour la production de la tension de référence.

8. Circuit d'entrée selon les revendications 2 à 7, **caractérisé en ce que** la grille (11) du MOSFET (1) est connectée à la masse via une diode Z (41).

9. Circuit d'entrée selon l'une des revendications précédentes, **caractérisé en ce qu'**un convertisseur élévateur (51) est monté entre le circuit de limitation de courant (1) et le condensateur autarcique (C).

10. Circuit d'entrée selon la revendication 9, **caractérisé en ce que** le convertisseur élévateur (51) est shunté par une diode (52) qui est conductrice pour des tensions d'alimentation (Ue) supérieures à la tension de condensateur (Uc).

11. Circuit d'entrée selon l'une des revendications 2 à 8, **caractérisé en ce que**, entre la grille (11) et le condensateur autarcique (C), sont disposées une diode (35) et une résistance (34) à valeur ohmique élevée, la diode (35) étant conductrice à partir d'une tension (Uc) sur le condensateur autarcique (C) qui est supérieure à la tension (Ug) sur la grille (11).

12. Utilisation du circuit d'entrée selon l'une des revendications précédentes pour des systèmes de bus d'équipements de protection d'occupants dans des véhicules automobiles avec transmission de données modulée sur la tension d'alimentation.
